# EUROPÄISCHE PATENTSCHRIFT

(11) **EP 3 810 463 B1**
(45) Veröffentlichungstag und Bekanntmachung des Hinweises auf die Patenterteilung: **15.03.2023**
(21) Anmeldenummer: 19732554.1
(22) Anmeldetag: 12.06.2019
(51) Int. Cl.: B60S 1/48

(54) **ELEKTRONISCH GEREGELTES HYDRAULISCHES REINIGUNGSSYSTEM**
ELECTRONICALLY CONTROLLED HYDRAULIC CLEANING SYSTEM
SYSTÈME DE NETTOYAGE HYDRAULIQUE À RÉGULATION ÉLECTRONIQUE

(30) Priorität: 22.06.2018 DE 102018210254
(43) Veröffentlichungstag der Anmeldung: 28.04.2021
(73) Patentinhaber: Continental Automotive Technologies GmbH, 30165 Hannover (DE)
(72) Erfinder: HAHN, Torsten, 60488 Frankfurt am Main (DE)
(74) Vertreter: Continental Corporation
(86) Internationale Anmeldenummer: PCT/EP2019/065335
(87) Internationale Veröffentlichungsnummer: WO 2019/243131

(56) Entgegenhaltungen:
- EP-A1- 3 168 094
- WO-A1-2018/189019
- DE-A1- 19 800 013
- DE-A1-102014 200 097
- US-A1- 2011 155 192

## Beschreibung

Die Erfindung betrifft ein hydraulisches Reinigungssystem zum Reinigen von transparenten Elementen optischen oder optoelektronischen Apparaten, insbesondere digitalen Kameras in einem Fahrzeug.

Kameras, LiDARe und vergleichbare Apparate zur Erfassung der Fahrzeugumgebung für automatisierte Assistenz- und Steuerungssysteme von Kraftfahrzeugen werden im Außenbereich am Fahrzeug angebracht und sind daher stark den Umwelteilflüssen ausgesetzt. Um deren Funktionalität zu gewährleisten, sind häufige Reinigungszyklen für eine jederzeit saubere Optik erforderlich. Üblicherweise erfolgt eine Reinigung durch eine dem jeweiligen Apparat benachbarte Reinigungseinheit mit einem wässrigen Reinigungsfluid, welches über eine Sprühdüse auf die Linse, deren Abdeckung oder Dergleichen aufgebracht wird.

Es ist bekannt, die Reinigungseinheiten von einer einzigen zentralen Pumpe über Hydraulikleitungen mit Reinigungsfluid zu versorgen.

Mit dem zunehmenden Automatisierungsgrad der Fahrzeuge werden derartigen Apparate in zunehmender Zahl eingesetzt, so können beispielsweise bis zu 20 und mehr zu reinigenden Objekte an verschiedenen Stellen an einem Fahrzeug angeordnet sein. Dies führt zu einem besonders hohen Verbrauch von Reinigungsfluid und unerwünscht großen und schweren Vorratsbehältern.

Hierfür ist es bekannt einzelne Leitungsstränge mit elektromagnetischen Sperrventilen zu versehen, mit denen die Abgabemenge für einzelnen Reinigungseinheiten gezielt begrenzt und gesteuert werden kann. Beispielsweise aus DE 10 2014200097 A1 ist es bekannt, Reinigungsdüsen für optische Sensoren über gesonderte Fluidleitungen zu betreiben, welche von den Scheiben- oder Scheinwerferreinigungsleitungen abgezweigt und gesondert mittels elektromechanischer Umschaltventile angesteuert werden.

Ein weiteres Problem stellen die in Abhängigkeit von jeweiligen Mischungsverhältnis oder Umgebungstemperatur stehenden, unterschiedlichen Viskositäten des Reinigungsfluid dar. Dies kann zu stark variierenden versprühten Abgabemengen und so zu einem unnötig hohen oder einem ungenügend niedrigen Verbrauch von Reinigungsfluid pro Reinigungsvorgang führen.

Um dies zu vermeiden und den Verbrauch zu begrenzen ist es bekannt, passive volumengesteuerte Dosiervorrichtungen zu verwenden, welche durch den Druck in der Hydraulikleitung angetrieben, konstruktiv festgelegte Volumina sequenziell an die nachgeschalteten Reinigungseinheiten abgeben.

Für ein optimales Reinigungsergebnis ist im Idealfall ein hoher Druckimpuls erforderlich, welcher zu einem intensiven Sprühstoß führt und damit auch stark anhaftende Verschmutzung entfernt. In Abhängigkeit vom Druck vergrößern sich auch die jeweiligen Leitungsverluste, die zudem proportional zu der Leitungslängen ansteigen. Bei zentraler Druckversorgung setzt dies eine entsprechend große und starke Versorgungspumpe mit hochdruckfesten Schlauchleitungen voraus, um die Leitungsverluste zu kompensieren, oder schwer verlegbare Schlauchleitungen mit einem besonders großen Querschnitt um die Verluste zu reduzieren.

Aus DE 198 00 013 A1 ist ein Reinigungssystem bekannt, in welchem zur Druckerhöhung ein passiver hydrostatischer Druckverstärker eingesetzt ist. Dieser muss jedoch zwangsweise alleine durch den von der zentralen Pumpe erzeugten Wasserdruck über eine lange Versorgungsleitung betrieben werden. Ein solches System weist konstruktionsbedingt eine hohe Trägheit auf, verlang zudem nach einer besonders leistungsfähigen zentralen Pumpe und vergleichsweise druckfest ausgelegten Versorgungsleitungen zwischen der Pumpe und dem Druckverstärker, um Verluste aufgrund der Leitungsdehnung zu minimieren oder einen höheren Arbeitsaufwand bei niedrigen Temperaturen auszugleichen. DE 198 00 013 A1 offenbart den Oberbegriff des Anspruchs 1.

Vor diesem Hintergrund liegt der Erfindung die Aufgabe zugrunde, ein verlustarmes Reinigungssystem vorzuschlagen, mit dem eine optimale Reinigung zur Sicherstellung der Funktion von optischen oder optoelektronischen Apparaten bei minimalem Flüssigkeitseinsatz mit verschiedenen Reinigungsfluiden bei unterschiedlichen Viskositäten in einem breiten Temperaturbereich möglich ist.

Diese Aufgabe wird durch die Merkmalskombination nach Anspruch 1 gelöst. Weiterbildungen und weitere Ausführungsbeispiele der Erfindung ergeben sich aus den Unteransprüchen und der nachfolgenden Beschreibung und Figuren.

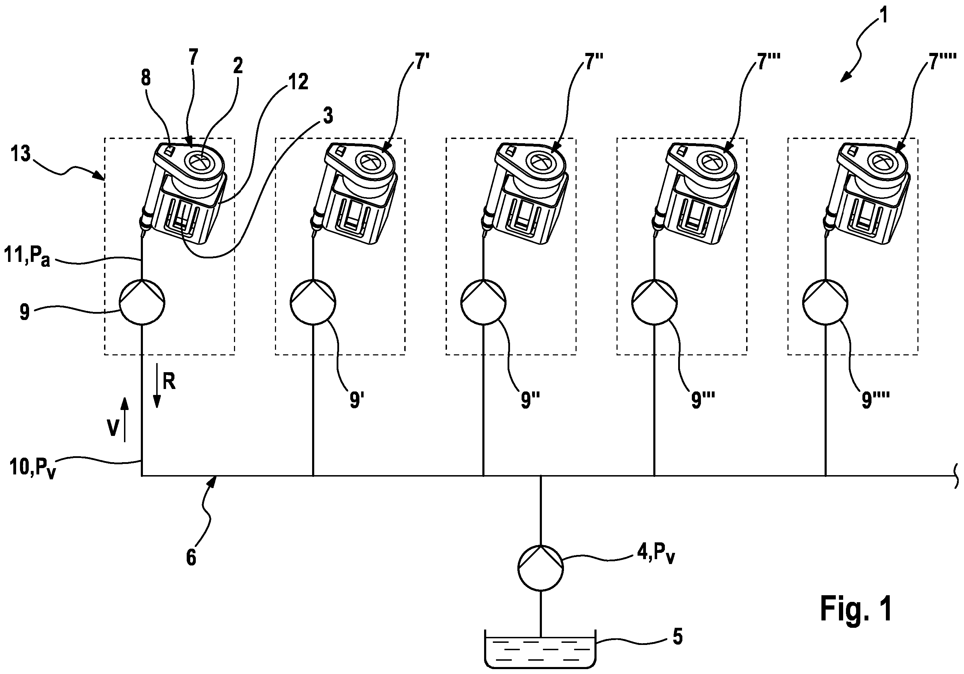

Nachfolgend werden die vorliegende Erfindung und deren Vorteile anhand der Darstellung in der Fig.1 näher erläutert.

In der Fig.1 ist stark vereinfacht ein Ausführungsbeispiel des erfindungsgemäßen Reinigungssystems 1 dargestellt.

Ein hydraulisches Reinigungssystem (1) zum Einbau wird von einer Vorlaufpumpe (4 aus einem Vorratsbehälter (5) mit Reinigungsfluid gespeist.

Dieser wird mit einem Vorlaufdruck Pv in Vorlaufrichtung V in eine Hydraulikleitung (6) gepumpt, welche mehrere Abzweigungen aufweisen kann. Jede Abzweigung endet mit einer Reinigungseinheit 7, 7', 7"..., die über eine oder mehrere Spritzdüsen 8 verfügt, aus denen das Reinigungsfluid auf das transparente Element (2) eines zugeordneten Apparats 3 aufgebracht wird, im gezeigten Beispiel auf die Linse einer Kamera. In der gezeigten Ausführungsform ist die Reinigungseinheit 7 mit dem Apparat 3 zu einer gemeinsamen Baubeziehungsweise Montageeinheit 12 vereint in einem gemeinsamen Gehäuse untergebracht.

In der unmittelbaren Nähe jeder Reinigungseinheit 7 ist in der Hydraulikleitung 6 jeweils eine Verdrängerpumpe 9 eingesetzt.

Verdrängerpumpen haben eine konstruktiv bedingte Eigenschaft, das Fluid sequenziell als definiert begrenzte Volumina zu fördern, so dass durch gezielte Steuerung vom verdrängten Volumen eine exakte Dosierung realisiert werden kann. Dabei ist das Zurückströmen des Fluides bei einer Verdrängerpumpe im Normallfall grundsätzlich konstruktiv durch geeignete Maßnahmen, beispielsweise interne Rückschlagventile oder Richtungsabhängige Dichtelemente, verhindert.

Dadurch bleibt die Hydraulikleitung (6) in Rücklaufrichtung (R) auch bei Stillstand der Verdrängerpumpe 9 stets absperrt und das Reinigungssystem 1 kann ohne zusätzliche Rückschlagventile stets befüllt einsatzbereit gehalten werden.

Bei Aktivierung der Verdrängerpumpe 9 wird das von der Vorlaufpumpe 4 unter dem Vorlaufdruck Pv bereitgestellte Reinigungsfluid mit einem signifikant erhöhten Arbeitsdruck (Pa), vorzugsweise in Form eines Hochdruckimpulses an die nachgeschaltete Reinigungseinheit (7) weitergeleitet.

Durch individuell anpassbare Ansteuerbarkeit der Verdrängerpumpe 7 kann für den nachgeschalteten Verbraucher die jeweils benötigte Menge von Reinigungsfluid unabhängig von Viskosität und Temperatur unter allen Betriebsbedingungen stets exakt bereitgestellt werden.

Dadurch können beispielsweise elektromagnetische Sperrventile sowie andere bekannte Mittel zur Dosierung der Abgabemenge von Reinigungsfluid substituiert werden.

Die Ansteuerung der Verdrängerpumpe 9 kann flexibel je nach dem verwendeten Pumpentyp erfolgen, beispielsweise über die Laufzeitdauer oder impulsartig bspw. für einzelne Kolbenhübe.

Bevorzugt kann innerhalb der Erfindung eine Verdrängerpumpe vom Kolbentyp eingesetzt werden. Diese kann beispielsweise derart dimensioniert sein, dass die für einen kompletten Reinigungsvorgang benötigte Menge von Reinigungsfluid durch einen einzigen Kolbenhub gefördert wird.

Dadurch kann die Verdrängerpumpe 9 als sogenannter "Langsamläufer" ausgebildet werden, wodurch eine Geräuschreduzierung gegenüber sogenannten Schnellläufern eintritt. Bei "Schnelläufern" wird das benötigte Reinigungsvolumen durch mehrere, sequenziell innerhalb sehr kurzer Zeit geförderte Teilvolumina zur Verfügung stellen. Dies können beispielsweise Membranenpumpen oder auch Kolbenpumpen mit geringen Verdrängungsvolumina sein.

Sollte jedoch ein einziger Kolbenhub nicht ausreichend sein, können für größere benötigte Reinigungsvolumina mehrere Kolbenhübe durchgeführt werden.

Da der Arbeitsdruck Pa durch die Verdrängerpumpe 9 erst unmittelbar vor der Reinigungseinheit 7 erzeugt wird, kann der Vorlaufdruck Pv relativ gering sein. Die Hydraulikleitung 6 wird dadurch in einen Niederdruckabschnitt 10 und einen Hochdruckabschnitt 11 aufgeteilt.

Wegen dem geringeren Vorlaufdruck Pv entstehen im Niederdruckabschnitt 10 weder große Druckverluste noch große Druckkräfte, sodass besonders einfache, kostengünstige Schlauchleitungen mit kleinen Querschnitten, sowie sehr langen Leitungslängen möglich werden. Ebenso kann die Vorlaufpumpe 4 mit einer vergleichsweise geringen Leistung, kostengünstig und leise ausgebildet sein.

Lediglich der wesentlich kürzere Hochdruckabschnitt 11 muss mit steiferen Schlauchleitungen höherer Festigkeit ausgestattet werden.

Um Druckverluste weiter zu minimieren und Reaktionszeiten zu verringern können Verdrängerpumpe 9 und Reinigungseinheit 7 und dem Apparat 3 als eine einzelne Baueinheit 13, insbesondere in einem gemeinsamen Gehäuse zusammengefasst angeordnet sein, sofern der zur Verfügung stehender Bauraum dies zulässt.

Im Übrigen sind Verdrängerpumpen meist selbstansaugend, wodurch eine Systementlüftung ohne Zusatzmittel erfolgen kann.

In der gezeigten Ausführungsform sind im Reinigungssystem 1 5 einzelne Verdrängerpumpen 9 bis 9ʺʺ mit jeweils einer nachgeschalteten Reinigungseinheit 7-7ʺʺ vorgesehen.

Innerhalb der Erfindung kann die Anzahl jedoch bedarfsgerecht beliebig variiert werden.

### Bezugszeichenliste

- 1: Reinigungssystem
- 2: Transparentes Element
- 3: Optisches oder optoelektronischen Apparat
- 4: Vorlaufpumpe
- 5: Vorratsbehälter
- 6: Hydraulikleitung
- 7: Reinigungseinheit
- 8: Sprühdüse
- 9: Vorrichtung
- 10: Niederdruckabschnitt
- 11: Hochdruckabschnitt
- 12: Baueinheit
- 13: Baueinheit
- Pv: Vorlaufdruck
- Pr: Reinigungsdruck
- R: Rücklaufrichtung
- V: Vorlaufrichtung

## Patentansprüche

1. Hydraulisches Reinigungssystem (1) zum Einbau in ein Fahrzeug zum Reinigen von mindestens einem transparenten Element (2) mindestens eines optischen oder optoelektronischen Apparats (3), insbesondere einer digitalen Kamera zur Erfassung von Fahrzeugumgebung, umfassend:
• Eine Vorlaufpumpe (4), welche ein Reinigungsfluid aus einem Vorratsbehälter (5) mit einem Vorlaufdruck Pv in eine Hydraulikleitung (6) in eine Vorlaufrichtung V fördert
• wenigstens eine an die Leitung angeschlossene Reinigungseinheit (7) mit wenigstens einer Sprühdüse (8) zum Aufbringen von Reinigungsfluid auf das transparente Element (2),
• wenigstens eine Vorrichtung (9), welche in der Hydraulikleitung (6) zwischen der Vorlaufpumpe (4) und der Reinigungseinheit (7) zwischengeschaltet ist, die Hydraulikleitung (6) in eine der Vorlaufrichtung (V) entgegengesetzte Rücklaufrichtung (R) absperrt und bei Aktivierung mindestens eine nachgeschaltete Reinigungseinheit (7) mit einem gegenüber dem Vorlaufdruck (Pv) erhöhtem Arbeitsdruck (Pa) versorgt, **dadurch gekennzeichnet, dass**
die Vorrichtung (9) als eine elektrisch, insbesondere elektronisch ansteuerbare, Verdrängerpumpe (9) ausgebildet ist.

2. Reinigungssystem (1) nach Anspruch 1 **dadurch gekennzeichnet, dass** die Verdrängerpumpe (9) in unmittelbarer Nähe der Reinigungseinheit (7) angeordnet ist

3. Reinigungssystem (1) nach Anspruch 1 oder 2 **dadurch gekennzeichnet, dass** die Reinigungsanlage (1) mehrere Verdrängerpumpen (9) aufweist, welche von einer gemeinsamen Vorlaufpumpe (4) versorgt werden, wobei jeder Verdrängerpumpe (9) mindestens eine Reinigungseinheit (7) zugeordnet ist.

4. Reinigungssystem (1) nach Anspruch 3 **dadurch gekennzeichnet, dass** jeder Verdrängerpumpe (9) jeweils eine einzige Reinigungseinheit (7) zur individuellen Versorgung nachgeschaltet ist.

5. Reinigungssystem (1) nach wenigstens einem der Ansprüche 1 bis 4 **dadurch gekennzeichnet, dass** eine von der Reinigungseinheit (7) bei einem einzelnen Reinigungsvorgang abgegebene Reinigungsfluidmenge durch eine Laufzeitansteuerung der vorgeschalteten Verdrängerpumpe (9) gesteuert wird.

6. Reinigungssystem (1) nach wenigstens einem der Ansprüche 1 bis 4 **dadurch gekennzeichnet, dass** die Verdrängerpumpe (9) als eine Kolbenpumpe ausgebildet ist und eine von der Verdrängerpumpe (9) nachgeschalteten Reinigungseinheit (7) bei einem einzelnen Reinigungsvorgang abgegebene Reinigungsfluidmenge durch Anzahl von Kolbenhüben der Verdrängerpumpe (9) gesteuert wird.

7. Reinigungssystem (1) nach Anspruch 6 **dadurch gekennzeichnet, dass** bei einem einzelnen Reinigungsvorgang abgegebene Reinigungsfluidmenge mit einem einzigen Kolbenhub der Verdrängerpumpe (9)gefördert wird.

8. Reinigungssystem (1) nach wenigstens einem der vorstehenden Ansprüche **dadurch gekennzeichnet, dass** ein durch die Vorlaufpumpe (4) und die Verdrängerpumpe (9) begrenzter erster Abschnitt der Hydraulikleitung (6) als Niederdruckabschnitt (10) und ein durch die Vorrichtung (9) und die Reinigungseinheit (7) begrenzter zweiter Abschnitt der Hydraulikleitung (6) als Hochdruckabschnitt (11) ausgebildet sind, wobei die Hydraulikleitung (6) im Hochdruckabschnitt (11) eine höhere Festigkeit als im Niederdruckabschnitt (10) aufweist.

9. Reinigungssystem (1) nach wenigstens einem der vorstehenden Ansprüche **dadurch gekennzeichnet, dass** die Reinigungseinheit (7) in einer gemeinsamen Baueinheit (12), insbesondere in einem gemeinsamen Gehäuse mit dem zugeordneten Apparat (3) zusammengefasst ausgebildet ist.

10. Reinigungssystem (1) nach wenigstens einem der vorstehenden Ansprüche **dadurch gekennzeichnet, dass** die Verdrängerpumpe (9) zusammen mit der zugeordneten Reinigungseinheit (7) in einer gemeinsamen Baueinheit (13), insbesondere in einem gemeinsamen Gehäuse zusammengefasst ausgebildet ist.

## Claims

1. Hydraulic cleaning system (1) for installing in a vehicle for cleaning at least one transparent element (2) of at least one optical or optoelectronic apparatus (3), in particular of a digital camera for recording a vehicle environment, comprising:
• a feed pump (4), which conveys a cleaning fluid from a storage container (5) with a feed pressure Pv into a hydraulic line (6) in a feed direction V,
• at least one cleaning unit (7), which is connected to the line and has at least one spray nozzle (8) for applying cleaning fluid to the transparent element (2),
• at least one device (9) which is interposed in the hydraulic line (6) between the feed pump (4) and the cleaning unit (7), shuts off the hydraulic line (6) in a return direction (R) opposite to the feed direction (V) and, when activated, supplies at least one cleaning unit (7) connected downstream with a working pressure (Pa) that is higher than the feed pressure (Pv), **characterized in that** the device (9) is in the form of an electrically, in particular electronically controllable positive displacement pump (9).

2. Cleaning system (1) according to Claim 1, **characterized in that** the positive displacement pump (9) is arranged in the immediate vicinity of the cleaning unit (7).

3. Cleaning system (1) according to Claim 1 or 2, **characterized in that** the cleaning system (1) has a plurality of positive displacement pumps (9) which are supplied by a common feed pump (4), wherein each positive displacement pump (9) is assigned at least one cleaning unit (7).

4. Cleaning system (1) according to Claim 3, **characterized in that** in each case a single cleaning unit (7) for individual supply is connected downstream of each positive displacement pump (9).

5. Cleaning system (1) according to at least one of Claims 1 to 4, **characterized in that** an amount of cleaning fluid dispensed by the cleaning unit (7) in an individual cleaning operation is controlled by a running time control of the positive displacement pump (9) connected upstream.

6. Cleaning system (1) according to at least one of Claims 1 to 4, **characterized in that** the positive displacement pump (9) is in the form of a piston pump, and an amount of cleaning fluid dispensed during an individual cleaning operation by the cleaning unit (7) connected downstream of the positive displacement pump (9) is controlled by the number of piston strokes of the positive displacement pump (9).

7. Cleaning system (1) according to Claim 6, **characterized in that** the amount of cleaning fluid dispensed during an individual cleaning operation is delivered with a single piston stroke of the positive displacement pump (9).

8. Cleaning system (1) according to at least one of the preceding claims, **characterized in that** a first portion of the hydraulic line (6) that is delimited by the feed pump (4) and the positive displacement pump (9) is in the form of a low-pressure portion (10), and a second portion of the hydraulic line (6) that is delimited by the device (9) and the cleaning unit (7) is in the form of a high-pressure portion (11), wherein the hydraulic line (6) has a higher strength in the high-pressure portion (11) than in the low-pressure portion (10).

9. Cleaning system (1) according to at least one of the preceding claims, **characterized in that** the cleaning unit (7) is formed in a manner combined with the associated apparatus (3) in a common structural unit (12), in particular in a common housing.

10. Cleaning system (1) according to at least one of the preceding claims, **characterized in that** the positive displacement pump (9) is formed in a combined manner together with the associated cleaning unit (7) in a common structural unit (13), in particular in a common housing.

## Revendications

1. Système de nettoyage hydraulique (1) à insérer dans un véhicule en vue de nettoyer au moins un élément transparent (2) au moins un appareil optique ou optoélectronique (3), notamment une caméra numérique de détection de l'environnement du véhicule, comprenant :
• une pompe montante (4) transportant un fluide de nettoyage provenant d'un réservoir (5) avec une pression montante Pv dans une conduite hydraulique (6) dans une direction montante V ;
• au moins une unité de nettoyage (7) raccordée à la conduite avec au moins une buse de pulvérisation (8) pour l'application de fluide de nettoyage sur l'élément transparent (2) ;
• au moins un dispositif (9) qui est interconnecté dans la conduite hydraulique (6) entre la pompe montante (4) et l'unité de nettoyage (7), qui débloque la conduite hydraulique (6) dans une direction de reflux (R) opposée à la direction montante (V) et qui alimente lors de l'activation au moins une unité de nettoyage (7) connectée en aval avec une pression de travail (Pa) accrue par rapport à la pression montante (Pv) ;
**caractérisé en ce que** :
le dispositif (9) prend la forme d'une pompe de refoulement (9) pouvant être commandée électriquement, notamment électroniquement.

2. Système de nettoyage (1) selon la revendication 1, **caractérisé en ce que** la pompe de refoulement (9) est disposée à proximité immédiate de l'unité de nettoyage (7).

3. Système de nettoyage (1) selon la revendication 1 ou 2, **caractérisé en ce que** l'installation de nettoyage (1) comporte plusieurs pompes de refoulement (9) alimentées par une pompe montante (4) commune, au moins une unité de nettoyage (7) étant associée à chaque pompe de refoulement (9).

4. Système de nettoyage (1) selon la revendication 3, **caractérisé en ce qu'**une seule unité de nettoyage (7) est respectivement connectée en aval à chaque pompe de refoulement (9) afin de lui fournir une alimentation individuelle.

5. Système de nettoyage (1) selon au moins l'une quelconque des revendications 1 à 4, **caractérisé en ce qu'**une quantité de fluide de nettoyage est distribuée par l'unité de nettoyage (7) en cas de processus de nettoyage individuel au travers d'une commande de temps de fonctionnement de la pompe de refoulement (9) connectée en amont.

6. Système de nettoyage (1) selon au moins l'une quelconque des revendications 1 à 4, **caractérisé en ce que** la pompe de refoulement (9) est réalisée sous la forme d'une pompe de piston et qu'une quantité de fluide de nettoyage distribuée par l'unité de nettoyage (7) connectée en aval de la pompe de refoulement (9) est commandée par un processus de nettoyage individuel au travers d'un certain nombre de courses de piston de la pompe de refoulement (9).

7. Système de nettoyage (1) selon la revendication 6, **caractérisé en ce que** la quantité de fluide de nettoyage distribuée au cours du processus de nettoyage individuel est transportée au moyen d'une seule levée de piston de la pompe de refoulement (9).

8. Système de nettoyage (1) selon au moins l'une quelconque des revendications précédentes, **caractérisé en ce qu'**une première section de la conduite hydraulique (6) délimitée par la pompe montante (4) et la pompe de refoulement (9) est réalisée sous la forme d'une section en basse pression (10) et qu'une deuxième section de la conduite hydraulique (6) délimitée par le dispositif (9) et l'unité de nettoyage (7) est réalisée sous la forme d'une section en haute pression (11), la conduite hydraulique (6) présente dans la section en haute pression (11) présentant une résistance supérieure à celle de la section en basse pression (10).

9. Système de nettoyage (1) selon au moins l'une quelconque des revendications précédentes, **caractérisé en ce que** l'unité de nettoyage (7) est réalisée dans une unité de construction (12) commune, notamment dans un carter commun les réunissant avec l'appareil (3) associé.

10. Système de nettoyage (1) selon au moins l'une quelconque des revendications précédentes, **caractérisé en ce que** la pompe de refoulement (9) est réalisée conjointement avec l'unité de nettoyage (7) associée dans une unité de construction commune (13), notamment dans un carter commun les réunissant.
